Europäisches Patentamt

European Patent Office

Office européen des brevets

(11) Publication number: **0 147 380**
**B1**

# EUROPEAN PATENT SPECIFICATION

(45) Date of publication of patent specification: 06.09.89

(21) Application number: 84870178.5

(22) Date of filing: 14.12.84

(51) Int. Cl.⁴: **D 21 H 3/28,** C 08 F 251/00, C 08 F 8/28 // (C08F251/00, 220:56)

(54) Functionalized polyacrylamide grafted starch polymer wet strength additives.

(30) Priority: 16.12.83 US 562343
08.11.84 US 669419

(43) Date of publication of application:
03.07.85 Bulletin 85/27

(45) Publication of the grant of the patent:
06.09.89 Bulletin 89/36

(84) Designated Contracting States:
AT BE CH DE FR GB IT LI LU NL SE

(56) References cited:
US-A-3 269 852
US-A-3 740 391
US-A-4 330 365

(73) Proprietor: AKZO N.V.
Velperweg 76
NL-6824 BM Arnhem (NL)

(72) Inventor: Van Eenam, Donald Neil
767 Oak Valley Drive
Des Peres Missouri 63131 (US)

(74) Representative: Pfeiffer, Ernst et al
Akzo NV Akzo Patents Department P.O. Box 314
NL-6800 AH Arnhem (NL)

Courier Press, Leamington Spa, England.

**Description**

The present invention relates to the field of wet strength additives for paper products. Specifically, the present invention is functionalized (preferably glyoxalated) polyacrylamide grafted starch polymer which can be used as a wet strength additive.

The use of additives to improve the wet strength of paper materials is well-knonw in the art. Typical wet strength sizing agents are glyoxalated acrylamide type polymers such as those disclosed in USP Nos. 3,556,932 and 3,658,640, both of which issued to Coscia et al.

Glyoxylated acrylamide starch polymers as described in USP No. 3,740,391 issued to Williams et al have also been known heretofore. This patent discloses a water soluble ionic glucopyranosyl polymer, of which starch is a particular example, wherein 50—100 mole percent of the total number of glycopyranosyl or glucose linkages carry acrylamide linkages. This resulting polymer is reacted with glyoxal such that at least 0.05 percent of the acrylamide linkages carry glyoxal substituents.

USP No. 3,061,471 and 3,095,391, issued to Brockway, disclose the preparation of acrylamide starch polymers prepared with a mild oxidizing agent, such as persulfates, hydrogen peroxide, and hydroperoxides. The resulting polymer has acrylamide polymers grafted to the glucose linkages of the starch.

The aim of the present invention was to provide a new wet strength additive for paper products giving improved wet strength properties to paper prepared therewith.

The invention provides an aldehyde substituted acrylamidated starch polymer comprising substituents derived from the reaction of the acrylamidated starch polymer with one or more materials containing two or more aldehyde units and useful as a water soluble wet strength paper additive, characterized in that the starch polymer is a polyacrylamide grafted starch polymer wherein at least 5 weight percent of the corresponding polyacrylamide grafted starch polymer is polyacrylamide.

Glyoxalated acrylamide starch polymers, such as those exemplified in USP NO. 3,740,391 issued to Williams et al, teach starch polymers wherein 50—100 mole percent of the glucose linkages carry acrylamide linkages which can be subsequently reacted with glyoxal. The polymers as exemplified by the Williams et al patent were prepared by reacting starch and acrylamide in the presence of sodium hydroxide which catalyzes an addition reaction between the acrylamide monomer and the starch. It is believed that the resulting polymers prepared by this reaction process and as taught by the Williams et al patent are comprised of monomeric acrylamide linkages attached to the starch. This is in contrast to the polymers of the present invention wherein polyacrylamide is grafted to the starch by free radical or equivalent polymerization.

The functionalized polyacrylamide grafted starch polymers in accordance with the present invention when used to prepare paper provide the paper with unexpectedly improved wet strength properties over the above discussed prior art glyoxalated acrylamide starch polymers.

The functionalized polyacrylamide grafted starch polymer of the present invention is comprised of a starch backbone from which polyacrylamide segments, as defined below, are grafted by a free-radical or an equivalent reaction process. This polyacrylamide grafted starch polymer is then reacted with a material containing two or more aldehyde units (preferably glyoxal). The resulting functionalized polyacrylamide grafted starch polymer is essentially water soluble, as would be necessary in the conventional wet-end treatment of paper pulp.

The preferred method of preparaing functionalized polyacrylamide grafted starch polymer in accordance with the present invention involves the free radical polymerization of acrylamide monomer from the starch. It is believed that a free radical is formed on the starch backbone which free radically polymerizes acrylamide monomer. Typically, these polyacrylamide grafted starch polymers are prepared by suspending the starch in an aqueous solution, adding acrylamide monomer, heating the suspension until the starch is gelatinized and then adding free radical catalyst. The free radical polymerization rection is typically carried out above the gelatinization temperature of the starch. Free radical catalysts useful in accordance with this invention may be those of the type that establish mild oxidizing conditions in the reaction mixture in the concentrations used and are usually classified as free radical formers or sometimes called peroxidic catalysts. This class of catalysts include, among others, hydrogen peroxides, aqueous soluble organic peroxides, hydroperoxides, persulfate salts such as potassium and ammonium persulfate and ceric ion. Other free radical catalysts are those classified as water soluble "azo" catalysts such as 2,2'-azo-bis(amidinopropane) hydrochloride. The reaction is typically carried out until all of the acrylamide monomer is consumed. The resulting polymer is comprised of a starch upon which polyacrylamide segments are grafted. This polyacrylamide grafted starch polymer is then funtionalized by reacting with a material containing two or more aldehyde units (e.g., glyoxal) by methods well known to those skilled in the art such as by a condensation reaction.

For the purposes of the present invention, the term "polyacrylamide" shall mean a polymer segment having more than two repeating units of vinyl-type monomer residues prepared by a free radical or an equivalent polymerization process, wherein at least about 50 weight percent of the polymer segment is acrylamide monomer residue. More preferably, the polyacrylamide of the present invention consists essentially of acrylamide monomer residue. It is believed that polyacrylamides as prepared in accordance with the present invention will typically have a minimum molecular weight of about 350. However, this is only a theory and should in no manner be taken to limit the scope of the present invention. All references herein to molecular weights refer to number average molecular weights which are determined by well-known methods.

As defined above, the polyacrylamide segments of the present invention are comprised of at least about 50 weight percent acrylamide with up to about 50 weight percent of the polyacrylamide segments comprised of other vinyl-type monomers. For the purpose of the present invention, "other vinyl-type monomer" shall mean any of various organic compounds containing a vinyl group which is available for free radical or equivalent polymerization provided such compound is capable of copolymerizing with acrylamide monomer to result in a polymer segment, which polymer segment when containing at least 50 weight percent acrylamide monomer residue and grafted to starch and functionalized as taught herein results in a polymer which has utility as an essentially water soluble paper wet strength additive as taught herein. In other words, any of a wide variety of comonomers are envisioned as being able to be employed without destroying the utility of the functionalized polyacrylamide grafted starch polymers taught herein. Typically, vinyl-type monomers other than acrylamide are used to provide the polymer of the present invention with anionic or cationic charges which as well known to those skilled in the art is useful when preparing paper by differing processes. Included among these compounds are styrene and substituted styrenes such as vinyl toluene, α-methyl styrene and chlorostyrene; compounds having the acrylic group as the polymerizable nucleus, such as acrylic and methacrylic acids, and salts or esters thereof (including the methyl, ethyl and butyl esters); acrylonitrile; vinyl chloride; vinyl acetate and other vinyl esters; vinyl pyridine and vinyl pyrrolidone; vinyl ketones; vinylidene compounds, such as vinylidene chloride; allylidene compounds such as allylidiene diacetates; conjugated diene monomers such as butadiene-1,3, isoprene, chlorobutadiene-1,3 and so on. Other vinyl-type monomers useful which will impart an ionic charge to the glyoxalated polyacrylamide grafted starch polymer, include diallylamine and its respective salts, N-alkyl diallylamine and its respective salts, diallyl dialkyl ammonium quaternary salts, N,N-dialkyl aminoalkyl acrylate and methacrylate and their respective salts, N,N-dialkyl amino alkyl acrylamide and methacrylamide and the respective salts and Ar-vinylbenzldialkyl amine and their respective salts, and such acids as vinylsulfonic acid, styrene sulfonic acid, (meth-)acrylamidopropanesulfonic acid and their respective salts.

Starches which are useful in preparing the polymers of the present invention include various carbohydrates such as, for example, indian corn starch, rice starch, waxy maize, waxy sorghum starch, tapioca starch, wheat starch, potato starch, pearl starch, sweet potato starch and derivatives thereof. The derivatives within the definition of the term "starch" herein include oxidized starches, hydroxy-alkylated starches, carboxylated starches, various solubilized starches, enzyme modified starches, etc. Thus, any of a wide variety of starch-derived materials can be used so long as they comprise material having repeat units of D-glucose linked together as in starch and containing sites for grafting of the polyacrylamide segments as taught herein.

In one preferred embodiment of the present invention, the starch from which the grafted starch polymer is prepared is a degraded starch. By "degraded starch" it is meant a starch which has been subjected to any of the degrading processes which are well known to those skilled in the art, such as reacting the starch with selected acids or enzymes, such that the resulting starch when in a 25 percent solids starch/aqueous solution will possess a Brookfield viscosity of less than about .05 Pa.s and, more preferably, less than about .03 Pa.s. The measurement of Brookfield viscosity is well known in the art. A typical enzyme used to prepare degraded starches is α-amalyase.

The functionalized polyacrylamide grafted starch polymer of the present invention is prepared by reacting a material containing two or more aldehyde units, such as glyoxal, with a polyacrylamide grafted starch polymer which is comprised of at least 5 weight percent polyacrylamide preferably from about 5 to about 90 weight percent, more preferably, from about 5 to about 70 weight percent. In accordance with one preferred embodiment, the polyacrylamide grafted starch polymer is comprised of from about 5 to about 15 weight percent of polyacrylamide while in another preferred embodiment from about 15 to about 70 weight percent. For the purpose of the present invention, the calculation of the weight percentage of polyacrylamide in the functionalized polyacrylamide grafted starch polymer shall be expressed in terms of the weight of polyacrylamide in the corresponding polyacrylamide grafted starch polymer with the term "corresponding polyacrylamide grafted starch polymer" meaning the polymer corresponding to the functionalized polyacrylamide grafted starch polymer but without the aldehyde derived substituents. The term "functionalized polyacrylamide grafted starch polymer" shall mean the polymer with the aldehyde derived substituents.

The amount of substituents derived from a material containing aldehyde units present on the glyoxalated polyacrylamide grafted starch polymers of the present invention is an effective amount for providing paper which has been prepared using the polymer of the present invention with sufficient wet strength. More specifically, by "effective amount" of such substituents it is meant an amount which results in a functionalized polyacrylamide grafted starch polymer which when added to paper stock at about 10 $kgs/ton_m$ with the paper stock being 50/50 hardwood-softwood and the paper prepared therefrom having a basis weight of about 13.6 $kg/278.7_m2$ will provide the paper with an initial wet strength of at least about 200 gram/cm, which result is an improvement over the wet-strength obtained in the same test employing just the corresponding polyacrylamide grafted starch polymer. The wet strength is calculated according to the Technical Association of the Pulp and Paper Industry standard test procedure T456OM—82, copyright 1982 by the Technical Association of the Pulp and Paper Industry, Technology Park/Atlanta, P.O. Box 105113, Atlanta, GA 30348, U.S.A. Preferably, the weight ratio on a solid basis of the corresponding polyacrylamide grafted starch polymer to substituents derived from a material containing aldehyde units is at least 1:1, preferably, from about 1:1 to about 20:1, more preferably about 5:1 to about 20:1, even more preferably about 8:1 to about 15:1. One method of preparing the functionalized polyacrylamide grafted starch polymer is by condensing a polyacrylamide grafted starch polymer with the aldehyde containing material, e.g., glyoxal, in an aqueous solution at a pH between 7 and 9.5.

Glyoxal is the preferred material to functionalize the polymers of the present invention. Other preferred materials containing more than one aldehyde unit include gluteraldehyde, cyanuric acid/acrolein condensates (i.e., cyanuric acid aldehydes), hexaglyoxalolmelamine, and condensate resins containing two or more reactive aldehyde groups such as melamine/aldehyde condensates. Other exemplary materials include malondialdehyde, succindialdehyde, tetraglyoxalolurea, urea/melamine/glyoxal condensates and phenol/aldehyde condensates. Any material which provides the desired functionality on the polymers of the present invention to result in the utility taught herein may be employed.

A material containing more than one aldehyde unit can react with the amide functionality of the polyacrylamide resulting in the polyacrylamide segment being functionalized with a unit having one or more aldehyde units, e.g., glyoxal reacts with the amide functionality of the polyacrylamide forming substituents having the theoretical formula: $-NH-CH(OH)-CHO$. The aldehyde unit remaining on the polyacrylamide segment is available for further reaction in the process of paper treatment.

The functionalized polyacrylamide starch polymer of the present invention is typically applied to the wet end of a paper-making process. The general manufacturing process for paper including the term "wet end" is well known to those skilled in the art. Generally, the amount of the functionalized polyacrylamide grafted starch polymers of the present invention used to prepare paper on a solids weight basis is between about 2.5 kgs/ton$_m$ and about 12.5 kgs/ton$_m$.

As will be demonstrated below, one of the preferred embodiments of functionalized polyacrylamide grafted starch polymers in accordance with the present invention is wherein the polyacrylamide is from about 5 to about 15 weight percent of the corresponding polyacrylamide grafted starch polymer. This polymer provides paper with an unexpectedly improved wet strength that may be reduced to less than about 50 percent of the original wet strength after prolonged (i.e., 5 to 30 minutes) soaking. Typical applications, where it is advantageous to have this type of reduction of wet strength are uses such as paper towels and toilet paper. In fact a permanent wet strength may not only be unnecessary for these types of applications, but may inhibit the decomposition of the paper materials in the natural environment, causing a pollution problem.

In another preferred embodiment of the present invention, the polyacrylamide is from about 15 to about 70 weight percent of the corresponding polyacrylamide grafted starch polymer. As will be demonstrated below, these polymers when used to prepare paper provide the paper with unexpectedly improved wet strength.

The following Examples illustrate the functionalized polyacrylamide grafted starch polymers in accordance with the present invention and compare these starch polymers with those polymers exemplified in Williams et al patent.

### Examples 1—5

Examples 1—5 demonstrate the preparation of glyoxalated polyacrylamide grafted starch polymers in accordance with the present invention. All of these examples were prepared by the procedure as set forth below and from an enzyme converted corn starch (i.e., degraded starch) which had a Brookfield viscosity at 25 percent solids (in water) of less than .03 Pa.s. This enzyme converted corn starch was prepared by adding to a slurry of Penford Gum 290 (a hydroxyl ethyl ether derivative of corn starch sold by Penick & Ford, Limited, a subsidiary of Penwest, 1001 First Street, S.W., Cedar Rapids, Iowa, 52406, with the numerical designation "290" referring to the degree of substitution; the process for manufacturing these starches is described in U.S. Patent Nos. 2,516,632, '633, and '634) 0.3—0.4 grams (gm) of an α-amalyase enzyme for every 350 gm of corn starch, heating the mixture to 76°C and holding at this temperature for 1 hour. The temperature of the mixture was raised to 96°C and held at this temperature for 15 minutes.

The procedure for preparing the glyoxalated polyacrylamide grafted starch polymers of Examples 1—5 is as follows. First, polyacrylamide grafted starch polymers were prepared in an aqueous solution by charging a 4-neck round bottom flask with acrylamide monomer, the enzyme converted corn starch, water and an ionic monomer which provides the final polymer with an ionic charge for purposes well known to those skilled in the art (any suitable ionic monomer can be used) in the amounts listed below in Table I. The contents of the flasks were heated to 80°C at which time three separate equal portions (6.67 milliliters (ml)) of potassium persulfate (a 3 percent aqueous solution) were added to each flask in over a ninety minute period (0, 45 and 90 minutes). The contents of the flasks were then allowed to cool to room temperature.

Next, these polyacrylamide grafted starch polymers were glyoxalated by separately reacting the prepared polyacrylamide grafted starch polymer solutions at room temperature with 10 gm of an aqueous solution of glyoxal (5 gm of glyoxal) and raising the pH of each solution to between about 8 and about 8.5 with a 10% NaOH aqueous solution.

The amounts of acrylamide monomer, starch, water, ionic monomer and the percent (%) of polyacrylamide and weight ratio of corresponding polyacrylamide grafted starch polymer to glyoxal derived substituents used for each of the Examples 1—5 is listed below in Table I.

TABLE I

| Ex. No. | Acrylamide Grams (gm) | Starch (gm) | $H_2O$ Milliliters (ml) | Ionic[a] Monomer (gm) | % Polyacrylamide | Weight Ratio Polymer:Glyoxal |
|---|---|---|---|---|---|---|
| 1 | 2.5 | 47.5 | 195.7 | 5.7 | 5 | 10:1 |
| 2 | 7.5 | 42.5 | 195.0 | 5.1 | 15 | 10:1 |
| 3 | 10.0 | 40.0 | 193.2 | 4.8 | 20 | 10:1 |
| 4 | 12.5 | 37.5 | 192.4 | 4.5 | 25 | 10:1 |
| 5 | 20.0 | 30.0 | 144.3 | 3.6 | 40 | 10:1 |

[a] Ageflex® FM-1Q-75MC a dimethylaminoethyl methacrylate quaternized with methyl chloride cationic monomer sold by CPS Chemicals Co., Inc.

### Examples 6 and 7

Examples 6 and 7 were prepared substantially in accordance with the procedures outlined in USP No. 3,740,391 for Example 1, which teaches the preparation of a glyoxalated acrylamide starch polymer for use as a wet strength agent. These examples were prepared for comparing the wet strength properties of these polymers with those of the present invention.

Example 6 was prepared from Apollo 480 (a cationic ether derivative of corn starch also sold by Penick & Ford, Limited) while Example 7 was prepared from the starch which was degraded as described above for Examples 1—5. In both Examples 6 and 7 acrylamide monomer and starch were dissolved in water. To this mixtue, an aqueous solution of NaOH was added and the temperature of the mixture was raised to and held at 70°C for 1 hour. The amounts of acrylamide, starch, water, NaOH, and acrylamide to glyoxal used for each example is listed below in Table II.

These mixtures were then cooled to room temperature at which time they were poured into 5 liters (l) of stirring methanol. The methanol was decanted off and the mixture was allowed to dry overnight forming a precipitate. 50 gm of each of the resultant precipitates were redissolved in 1250 ml of water. The temperature of each mixture was raised to about 95—98°C and held at this temperature for 30 minutes. The mixture was then cooled to room temperature and 30 gm of $Na_2HPO_4 \cdot 7H_2O$ were added to each mixture. The pH of each mixture was adjusted to 7.9 by adding a sufficient amount of NaOH. To each mixture 110 gm of water and 63 gm of a 40% aqueous glyoxal solution (0.043 moles) were added.

The mixtures were stirred for 1½ to 2 hours at 50°C until there was an appreciable increase in the viscosity of the solution. The reaction was terminated by adjusting the pH to 3.5 with 12 Normal (N) HCl solution and cooling to room temperature.

As seen from the above description, the procedure is substantially as set forth in Example 1 of the '391 patent, except for an approximate 10-fold increase in the amounts of materials used to prepare the polymers. This was done to ease the handling of the materials.

TABLE II

| Ex. No. | Acrylamide gm | Starch gm | Water ml | NaOH gm | % Acrylamide | Weight Ratio Acrylamide:Glyoxal |
|---------|---------------|-----------|----------|---------|--------------|---------------------------------|
| 6 | 710 | 110 | 59.5 | 10 | 86.6 | 2:1 |
| 7 | 355 | 440 | 95 | 20 | 44.7 | 2:1 |

Each of the starch polymers prepared in Examples 1—7 were added to a paper stock and paper prepared therewith was tested. The addition of these polyers to the paper stock and method of preparing paper therefrom was carried out by techniques well known in the art and described generally in Pulp and Paper Manufacture, Vol. III, Papermaking and Paperboard Making, R. G. MacDonald, Editor; J. N. Franklin, Tech. Editor, McGraw-Hill Book Company, 1970. The functionalized polyacrylamide grafted starch polymer was added to 10 kgs/ton$_m$ to a paper stock of 50/50 bleached hardwood kraft/softwood kraft. On the Pilot Fourdrinier paper machine which was used, the addition point was between the machine chest and the fan pump with in-line mixing providing uniform dispersion throughout the thick stock. The paper samples prepared using each of the starch polymer Examples 1—7 were cut into strips for the measurement of wet strength by the aforementioned Technical Association of the Pulp and Paper Industry (TAPPI), standard test procedure T456OM—82 which is well known to those skilled in the art. Three wet strength measurements were made of each paper sample the first being the initial wet strength measured after saturation of the paper with deionized water and the second and third after the paper was subjected to soaking in deionized water for 5 minutes and 30 minutes, respectively. The resulting wet strengths for each paper sample are listed below in Table III according to the starch polymer example used to prepare the paper. Also listed below in Table III are the basis weights (kg/278.7$_m$2) of the paper.

## TABLE III

| Ex. No. | Basis Weight (kg/278.7$_m$ 2) | WET STRENGTH Gram/ cm | | |
| --- | --- | --- | --- | --- |
| | | Initial | 5 min. | 30 min. |
| 1 | 14.0 | 244.5 | 69 | 48.7 |
| 2 | 14.3 | 384 | 218 | 199 |
| 3 | 14.2 | 369 | 291 | 238.6 |
| 4 | 14.1 | 282 | 212.5 | 186.8 |
| 5 | 14.1 | 490.5 | 386 | 374.6 |
| 6 | 14.4 | 64.5 | 34.8 | 21 |
| 7 | 14.5 | 42 | 24 | 24.6 |

As can be seen from the above data, paper prepared using the starch polymers in accordance with the present invention (Examples 1—5) demonstrated significantly improved wet strength over paper prepared using the starch polymers of Examples 6 and 7 even though Examples 6 and 7 had higher percentages of acrylamide, and higher amounts of glyoxal substituents as represented by the lower acrylamide to glyoxal weight ratios.

### Example 8

Example 8 is an example of a glyoxalated polyacrylamide grafted starch polymer prepared in accordance with the present invention illustrating the use of a non-degraded starch and its usefulness as a wet strength additive.

The Example 8 was prepared according to the procedures set forth above for Examples 1—5, except that the corn starch was not treated with α-amalyase. The amounts of acrylamide monomer, starch, water, glyoxal, ionic monomer and the percent (%) of polyacrylamide and weight ratio of corresponding polyacrylamide grafted starch polymer to glyoxal derived substituents used to prepare Example 8 is listed below in Table IV.

TABLE IV

| Ex. No. | Glyoxal (gm) | Acrylamide (gm) | Starch (gm) | Water (ml) | Ionic [a] Monomer (gm) | (%) Polyacrylamide | Weight Ratio Polymer:Glyoxal |
|---|---|---|---|---|---|---|---|
| 8 | 5.0 | 7.5 | 42.5 | 195.0 | 5.1 | 15 | 10:1 |

[a] Ageflex® FM-1Q-75MC.

Example 8 was used to prepare paper in accordance with the procedures set forth above for Examples 1—7 and the resulting paper was tested for its wet strength at initial, 5 minute and 30 minute intervals, also in accordance with the above set forth procedures. The resulting wet strengths for the paper prepared using the polymer of Example 8 and the basis weight of the polymer added to the paper stock is listed below in Table V.

TABLE V

| Basis Weight (kg/278.7 m$^2$) | WET STRENGTH gram/cm | | |
| --- | --- | --- | --- |
| | Initial | 5 min. | 30 min. |
| 14.6 | 418.5 | 302 | 286 |

Examples 9—12

Examples 9 through 12 demonstrate the preparation of starch polymers prepared in accordance with the present invention wherein the amount of glyoxal reacted is varied within the range specified for the present invention.

Examples 9—12 were prepared according to the procedure set forth above for Examples 1—5 with the amounts of glyoxal, acrylamide monomer, starch, water, ionic monomer and percent (%) polyacrylamide and weight ratio of corresponding polyacrylamide grafted starch polymer to glyoxal derived substituents listed below in Table VI.

11

TABLE VI

| Ex. No. | Glyoxal (gm) | Acrylamide (gm) | Starch (gm) | Water (ml) | Ionic [a] Monomer (gm) | (%) Polyacrylamide | Weight Ratio Polymer:Glyoxal |
|---------|--------------|-----------------|-------------|------------|------------------------|--------------------|------------------------------|
| 9 | 10.0 | 7.5 | 42.5 | 195.0 | 5.1 | 15 | 5:1 |
| 10 | 6.3 | 7.5 | 42.5 | 195.0 | 5.1 | 15 | 8:1 |
| 11 | 3.3 | 7.5 | 42.5 | 195.0 | 5.1 | 15 | 15:1 |
| 12 | 2.5 | 7.5 | 42.5 | 195.0 | 5.1 | 15 | 20:1 |

[a] Ageflex® FM-1Q-75MC.

EP 0 147 380 B1

Examples 9—12 were used to prepare paper in accordance with the procedures set forth above for Examples 1—7 and the resulting paper was tested for its wet strength at initial, 5 minute and 30 minute intervals also in accordance with the above set forth procedures. The resulting wet strengths for the paper prepared using the polymers of Examples 9—12 and the basis weight of the polymer added to the paper stock is listed below in Table VII.

TABLE VII

| Polymer Ex. No. | Basis Weight (kg/278.7 m2) | WET STRENGTH Gram/cm | | |
|---|---|---|---|---|
| | | Initial | 5 min. | 30 min. |
| 9 | 14.3 | 611.4 | 296.5 | 257.9 |
| 10 | 14.6 | 632.3 | 372.4 | 329 |
| 11 | 14.35 | 531.5 | 345.6 | 309 |
| 12 | 14.45 | 466.5 | 366.2 | 337.4 |

Example 13—20

Examples 13—20 further demonstrate grafted starch polymers in accordance with the present invention employing different starches and containing various levels of polyacrylamide and various weight ratios of corresponding polyacrylamide grafted starch polymer to glyoxal derived substituents. These examples were prepared according to the procedure set forth above for Examples 1—5 with Table VIII indicating the amounts of glyoxal, acrylamide monomer, starch, water, ionic monomer and the percent (%) polyacrylamide and the weight ratio of corresponding polyacrylamide grafted starch polymer to glyoxal derived substituents.

TABLE VIII

| Ex. No. | Glyoxal (gm) | Acrylamide (gm) | Starch (gm) | Water (ml) | Ionic [e] Monomer (gm) | (%) Polyacrylamide | Weight Ratio Polymer:Glyoxal |
|---|---|---|---|---|---|---|---|
| 13 | 2.5 | 8.8 | 6.7[a] | 230.0 | 2.1 | 50 | 7:1 |
| 14 | 3.2 | 12.6 | 11.1[a] | 224.8 | 1.5 | 50 | 7:1 |
| 15 | 1.9 | 9.4 | 7.2[b] | 229.3 | 2.3 | 50 | 10:1 |
| 16 | 1.8 | 9.0 | 7.9[b] | 230.3 | 1.1 | 50 | 10:1 |
| 17 | 0.8 | 9.9 | 1.0[b] | 236.8 | 1.5 | 80 | 15:1 |
| 18 | 2.5 | 6.3 | 5.6[b] | 235.0 | 0.6[f] | 50 | 5:1 |
| 19 | 3.2 | 11.0 | 8.4[c] | 224.8 | 2.7 | 50 | 7:1 |
| 20 | 3.9 | 10.9 | 13.6[d] | 219.0 | 2.7[g] | 40 | 7:1 |

[a] Enzyme Converted Penford Gum 295 Hydroxyethylated Starch

[b] Penford Gum 295 Hydroxyethylated Starch

[c] Penick & Ford Apollo 460 Cationic Starch

[d] 1:1 Weight Ratio of Apollo 460/Penford Gum 295 Starches

[e] Sipomer® Q5-80: Alcolac's Dimethyl Sulfate Quaternary of Dimethylaminoethyl Methacrylate (unless otherwise indicated)

[f] Acrylic Acid

[g] Sipomer® Q6-75: Alcolac's Methyl Chloride Quaternary of Dimethylaminoethyl Methacrylate

The polymers of Examples 13—20 were used to prepare paper in accordance with the procedures set forth above for Examples 1—7 at two different add-on levels, and the resulting paper was tested for initial wet strength also in accordance with the above set forth procedures. In the test of the polymer of Example 18, a retention aid (Santofloc® C resin sold by Monsanto Company under its Santofloc® trademark) was also added to the paper stock at a weight ratio of 2:1 (polymer:Santofloc®). The results are set forth below in Table IX.

## TABLE IX

| Polymer Ex. No. | 5 kgs/ton Add-On | | 10 kgs/ton Add-on | |
|---|---|---|---|---|
| | Basis Weight (kg/278.7 2) | Wet Strength (Grams/cm) | Basis Weight (kgs/278.7 2) | Wet Strength (Grams/cm) |
| 13 | 14.5 | 196.5 | 14.3 | 268 |
| 14 | 14.4 | 196.5 | 14.8 | 339 |
| 15 | 15.2 | 268 | 15.6 | 411 |
| 16 | 14.9 | 339 | 14.9 | 518 |
| 17 | 14.8 | 393 | 15.0 | 572 |
| 18 | 14.9 | 232 | 15.0 | 357 |
| 19 | 15.7 | 232 | 15.7 | 338 |
| 20 | 14.3 | 125 | 14.45 | 196.5 |

### Examples 21—27

Examples 21—26 further demonstrate grafted starch polymers in accordance with the present invention employing various aldehyde materials. Example 27 employs only formaldehyde (a monoaldehyde) as an aldehyde and is outside the scope of the present invention. These examples were prepared according to the procedure set forth above for Examples 1—5 with Table X indicating the amounts of aldehyde, acrylamide monomer, starch, water, ionic monomer and the percent (%) polyacrylamide and the weight ratio of corresponding polyacrylamide grafted starch polymer to aldehyde derived substituents.

15

TABLE X

| Ex. No. | Aldehyde Material (gm) | Acrylamide (gm) | Starch[h] (gm) | Water (ml) | Ionic[j] Monomer (gm) | (%) Polyacrylamide | Weight Ratio Polymer:Aldehyde Material |
|---|---|---|---|---|---|---|---|
| 21 | 3.2[a] | 6.3 | 7.9 | 231.0 | 1.6 | 40 | 5:1 |
| 22 | 6.2[b] | 12.3 | 15.4 | 213.0 | 3.1 | 40 | 5:1 |
| 23 | 3.7[c] | 8.4 | 8.4 | 227.8 | 1.7 | 45.5 | 5:1 |
| 24 | 3.7[d] | 8.4 | 8.4 | 227.8 | 1.7 | 45.5 | 5:1 |
| 25 | 3.5[e] | 8.1 | 8.1 | 228.8 | 1.6 | 45.5 | 5:1 |
| 26 | 4.0[f] | 9.5 | 7.2[i] | 227.0 | 2.3[k] | 50 | 4.8:1 |
| 27 | 1.8[g] | 8.5 | 7.5[i] | 231.3 | 1.0[k] | 50 | 9.5:1 |

[a] Glyoxal

[b] Cyanuric Acid Trialdehyde: Cyanuric Acid/Acrolein Mole Ratio 1:3

[c] Hexaglyoxylol Melamine: Melamine/Glyoxal Mole Ratio 1:6

[d] Resol Resin: Melamine/Formaldehyde/Glyoxal Mole Ratio 1:3:3

[e] Gluteraldehyde

[f] Formaldehyde/Glyoxal Mixture (Weight Ratio 1.04:1)

[g] Formaldehyde

[h] Enzyme Converted Penford Gum 295 Hydroxyethylated Starch (unless otherwise indicated)

[i] Penford Gum 295 Hydroxyethylated Starch

[j] FM-1Q-75MC: CPS Chemical's Methylchloride Quaternary of Dimethylaminoethyl Methacrylate (unless otherwise indicated)

[k] Sipomer® Q5-80: Alcolac's Dimethyl Sulfate Quaternary of Dimethylaminoethyl Methacrylate

The polymers of Examples 21—27 were used to prepare paper in accordance with the procedure set forth above for Examples 1—7 at two different add-on levels and the resulting paper was tested for initial wet strength also in accordance with the above set forth procedure. The results are set forth below in Table XI.

### TABLE XI

| Polymer Ex. No. | 5 kgs/ton Add-On | | 20 kgs/ton Add-on | |
|---|---|---|---|---|
| | Basis Weight $(kg/278.7\ m^2)$ | Wet Strength (Grams/cm) | Basis Weight $(kg/278.7\ m^2)$ | Wet Strength (Grams/cm) |
| 21 | 14.8 | 286 | 14.8 | 446.5 |
| 22 | 14.8 | 250 | 15.1 | 339 |
| 23 | 14.8 | 303.5 | 14.9 | 429 |
| 24 | 15.1 | 321 | 14.9 | 446.5 |
| 25 | 15.2 | 220 | 15.1 | 321 |
| 26 | 14.75 | 357 | 14.6 | 482 |
| 27 | 14.75 | 71 | 14.7 | 88 |

**Claims**

1. An aldehyde substituted acrylamidated starch polymer comprising substituents derived from the reaction of the acrylamidated starch polymer with one or more materials containing two or more aldehyde units and useful as a water soluble wet strength paper additive, characterized in that the starch polymer is a polyacrylamide grafted starch polymer wherein at least 5 weight percent of the corresponding polyacrylamide grafted starch polymer is polyacrylamide.

2. A substituted polyacrylamide grafted starch polymer of Claim 1, wherein 5 to 90 weight percent of the corresponding polyacrylamide grafted starch polymer is polyacrylamide.

3. A substituted polyacrylamide grafted starch polymer in accordance with either Claim 1 or Claim 2, wherein the substituents are derived from material selected from glyoxal, gluteraldehyde, cyanuric acid aldehydes, hexaglyoxalmelamine, melamine/aldehyde condensates containing two or more reactive aldehyde groups, and combinations thereof.

4. A substituted polyacrylamide grafted starch polymer of Claim 3, wherein the substituents are derived from glyoxal.

5. A substituted polymer according to either Claim 1 or Claim 2, that is a glyoxalated polyacrylamide grafted starch polymer wherein (i) from 5 to 15 weight percent of the corresponding polyacrylamide grafted starch polymer is polyacrylamide and, (ii) the glyoxal derived substituents are provided in an effective amount to provide wet strength of at least 200 g/cm to paper prepared using the glyoxalated polyacrylamide grafted starch polymer.

6. A substituted polymer according to either Claim 1 or Claim 2, that is a glyoxalated polyacrylamide grafted starch polymer wherein (i) from 15 to 70 weight percent of the corresponding polyacrylamide grafted starch polymer is polyacrylamide and, (ii) the glyoxal derived substituents are provided in an effective amount to provide wet strength of at least 200 g/cm to paper prepared using the glyoxalated polyacrylamide grafted starch polymer.

7. A polymer of any of the preceding claims, wherein the weight ratio on a solids basis of the corresponding polyacrylamide grafted starch polymer to substituents derived from materials containing aldehyde units is from 1:1 to 20:1.

8. A polymer of Claim 7, wherein the weight ratio is from 5:1 to 20:1.

9. A polymer of any of the preceding claims, wherein the starch from which the functionalized polyacrylamide grafted starch polymer is prepared is a degraded starch.

10. A polymer of Claim 9, wherein the starch from which the functionalized polyacrylamide grafted starch polymer is prepared is a degraded starch having a Brookfield viscosity of less than 0.03 Pa.s.

11. A polymer of either Claim 9 or Claim 10, wherein the degraded starch is an enzyme converted starch.

12. A polymer of any of the preceding claims, wherein the polyacrylamide has a molecular weight of at least 350.

13. Paper comprising as wet-strength additive a polymer according to any of the preceding claims.

14. Paper according to Claim 13, having a wet strength at least 200 g/cm.

# EP 0 147 380 B1

## Patentansprüche

1. Aldehydsubstituiertes acrylamidiertes Stärkepolymer, das Substituenten enthält, die aus der Umsetzung des acrylamidierten Stärkepolymers mit einer oder mehreren Substanz(en) abgeleitet sind, die zwei oder mehr Aldehydeinheiten enthält bzw. enthalten, und das als wasserlösliches Nassfestigkeits-Papieradditiv brauchbar ist, dadurch gekennzeichnet, dass das Stärkepolymer ein mit Polyacrylamid gepfropftes Stärkepolymer ist, worin mindestens 5 Gew.% des entsprechenden, mit Polyacrylamid gepfropften Stärkepolymers Polyacrylamid sind.

2. Substituiertes, mit Polyacrylamid gepfropftes Stärkepolymer nach Anspruch 1, bei dem 5 bis 90 Gew.% des entsprechenden, mit Polyacrylamid gepfropften Stärkepolymers Polyacrylamid sind.

3. Substituiertes, mit Polyacrylamid gepfropftes Stärkepolymer nach Anspruch 1 oder Anspruch 2, bei dem die Substituenten abgeleitet sind von den Stoffen: Glyoxal, Gluteraldehyd, Cyanursäurealdehyden, Hexaglyoxalolmelamin, Melamin/Aldehyd-Kondensaten enthaltend zwei oder mehr reaktive Aldehydgruppen oder Kombinationen hiervon.

4. Substituiertes, mit Polyacrylamid gepfropftes Stärkepolymer nach Anspruch 3, bei dem die Substituenten von Glyoxal abgeleitet sind.

5. Substituiertes Polymer nach Anspruch 1 oder Anspruch 2, das ein glyoxaliertes, mit Polyacrylamid gepfropftes Stärkepolymer ist, in welchem (i) 5 bis 15 Gew.% des entsprechenden, mit Polyacrylamid gepfropften Stärkepolymers Polyacrylamid ist und (ii) die von Glyoxal abgeleiteten Substituenten in einer wirksamen Menge vorhanden sind, um einem unter Verwendung des glyoxalierten, mit Polyacrylamid gepfropften Stärkepolymers hergestellten Papier eine Nassfestigkeit von mindestens 200 g/cm zu verleihen.

6. Substituiertes Polymer nach Anspruch 1 oder Anspruch 2, das ein glyoxaliertes, mit Polyacrylamid gepfropftes Stärkepolymer ist, in dem (i) 15 bis 70 Gew.% des entsprechenden, mit Polyacrylamid gepfropften Polymers Polyacrylamid sind und (ii) die von Glyoxal abgeleiteten Substituenten in einer wirksamen Menge vorhanden sind, um einem unter Verwendung des glyoxalierten, mit Polyacrylamid gepfropften Stärkepolymers hergestellten Papier eine Nassfestigkeit von mindestens 200 g/cm zu verleihen.

7. Polymer nach einem der vorangehenden Ansprüche, bei dem das auf die Feststoffe bezogene Gewichtsverhältnis des entsprechenden, mit Polyacrylamid gepfropften Stärkepolymers zu den von den Aldehydgruppen enthaltenden Stoffen abgeleiteten Substituenten 1:1 bis 20:1 beträgt.

8. Polymer nach Anspruch 7, bei dem das Gewichtsverhältnis 5:1 bis 20:1 beträgt.

9. Polymer nach einem der vorangehenden Ansprüche, bei dem die Stärke, aus der das funktionalisierte, mit Polyacrylamid gepfropfte Stärkepolymer hergestellt ist, eine abgebaute Stärke ist.

10. Polymer nach Anspruch 9, bei dem die Stärke, aus welcher das funktionalisierte, mit Polyacrylamid gepfropften Stärkepolymer hergestellt ist, ein abgebaute Stärke mit einer Brookfield-Viskosität von unter 0,03 Pa.s ist.

11. Polymer nach Anspruch 9 oder Anspruch 10, bei dem die abgebaute Stärke eine enzymkonvertierte Stärke ist.

12. Polymer nach einem der vorangehenden Ansprüche, bei dem das Polyacrylamid ein Molekulargewicht von mindestens 350 hat.

13. Papier, das als Nassfestigkeitsadditiv ein Polymer nach einem der vorangehenden Ansprüche enthält.

14. Papier nach Anspruch 13, das eine Nassfestigkeit von mindestens 200 g/cm hat.

## Revendications

1. Un polymère d'amidon acrylamidé substitué par un aldéhyde comprenant des substituants provenant de la réaction d'un polymère d'amidon acrylamidé avec une ou plusieurs substances contenant deux motifs aldéhyde ou plus et utilisable en tant qu'additif soluble dans l'eau conférant la résistance au mouillé au papier, caractérisé en ce que le polymère d'amidon est un polymère d'amidon greffé par polyacrylamide, dans lequel au moins 5% en poids du polymère correspondant d'amidon greffé par polyacrylamide consiste en polyacrylamide.

2. Un polymère d'amidon greffé par polyacrylamide et substitué selon la revendication 1, dans lequel de 5 à 90% en poids du polymère correspondant d'amidon greffé par polyacrylamide consistent en polyacrylamide.

3. Un polymère d'amidon greffé par polyacrylamide et substitué selon la revendication 1 ou 2, dans lequel les substituants dérivent de substances choisies dans le groupe formé par le glyoxal, l'aldéhyde glutarique, les acides-aldéhydes cyanuriques, l'hexaglyoxalolmélamine, les condensats mélamine/aldéhyde contenant deux groupes aldéhyde réactifs ou plus et leurs combinaisons.

4. Un polymère d'amidon greffé par polyacrylamide et substitué selon la revendication 3, dans lequel les substituants dérivent du glyoxal.

5. Un polymère substitué selon la revendication 1 ou 2, qui consiste en un polymère d'amidon gréffe par polyacrylamide et glyoxalé, dans lequel (i) de 5 à 15% en poids du polymère correspondant d'amidon greffé par polyacrylamide consistent en polyacrylamide et (ii) les substituants dérivés du glyoxal sont apportés en quantité efficace pour conférer une résistance au mouillé d'au moins 200 g/cm au papier préparé à l'aide du polymère d'amidon greffé par polyacrylamide et glyoxalé.

6. Un polymère substitué selon la revendication 1 ou 2, qui consiste en un polymère d'amidon gréffe par polyacrylamide et glyoxalé, dans lequel (i) de 15 à 70% en poids du polymère correspondant d'amidon greffé par polyacrylamide consistent en polyacrylamide et (ii) les substituants dérivés du glyoxal sont apportés en quantité efficace pour conférer un résistance au mouillé d'au moins 200 g/cm au papier préparé à l'aide du polymère d'amidon greffé par polyacrylamide et glyoxalé.

7. Un polymère selon l'une quelconque des revendications qui précèdent, dans lequel le rapport en poids et en matières solides entre le polymère correspondant d'amidon greffé par polyacrylamide et les substituants dérivant de substances contenant des motifs aldéhyde va de 1:1 à 20:1.

8. Un polymère selon la revendication 7, dans lequel le rapport en poids va de 5:1 à 20:1.

9. Un polymère selon l'une quelconque des revendications qui précèdent, dans lequel l'amidon utilisé pour la préparation du polymère d'amidon greffé par polyacrylamide et fonctionnalisé est un amidon dégradé.

10. Un polymère selon la revendication 9, dans lequel l'amidon utilisé pour la préparation du polymère d'amidon greffé par polyacrylamide et fonctionnalisé est un amidon dégradé ayant une viscosité Brookfield inférieure à 0,03 Pa.s.

11. Un polymère selon la revendication 9 ou 10, dans lequel l'amidon dégradé est un amidon converti par un enzyme.

12. Un polymère selon l'une quelconque des revendications qui précèdent, dans lequel le polyacrylamide a un poids moléculaire d'au moins 350.

13. Papier contenant en tant qu'additif conférant la résistance au mouillé un polymère selon l'une quelconque des revendications qui précèdent.

14. Papier selon la revendication 13, ayant une résistance au mouillé d'au moins 200 g/cm.